# EUROPEAN PATENT SPECIFICATION

(11) **EP 4 671 055 B1**
(45) Date of publication and mention of the grant of the patent: **02.12.2026**
(21) Application number: 25176875.0
(22) Date of filing: 16.05.2025
(51) Int. Cl.: B60R 21/231, B60R 21/2338

(54) **AIR BAG DEVICE**
AIRBAGVORRICHTUNG
DISPOSITIF DE COUSSIN GONFLABLE

(30) Priority: 31.05.2024 KR 20240071524
(43) Date of publication of application: 31.12.2025
(73) Proprietor: Hyundai Mobis Co., Ltd., Gangnam-gu Seoul 06141 (KR)
(72) Inventor: KO, Byeong Mann, 16898 Gyeonggi-do (KR); HWANGBO, Sang Won, 16929 Gyeonggi-do (KR)
(74) Representative: Vossius & Partner Patentanwälte Rechtsanwälte mbB

(56) References cited:
- DE-A1- 102022 104 440
- US-A1- 2022 388 472

## Description

### BACKGROUND

### 1. Field

The present disclosure relates to an airbag device configured to prevent a tether that is unfolded between an omnidirectional airbag and a passenger seat from being brought into contact with a body part of a passenger.

### 2. Description of the Related Art

US 2022/388472 A1 discloses a seat airbag for a vehicle, the seat airbag including an airbag cushion including lateral cushions configured to be deployed forward from lateral sides of a seatback, and front cushions bent and extending from front ends of the lateral cushions toward a seat center and positioned at a front side of the passenger, and support tethers configured to connect upper portions of the front cushions and an upper portion of the seatback or connect lower portions of the front cushions and a lower portion of the seatback so that the front cushions support a passenger when the passenger is loaded onto the front cushions.

DE 10 2022 104440 A1 discloses a restraint device that has an airbag which, when deployed, comprises a first part, a second part, and a third part. The first part extends from its first end in a first direction over the shoulder of a person sitting on the vehicle seat to a second end remote from the backrest, which is located in front of the person's head and/or torso, and in a second direction from a third end outside the person to a fourth end inside the person. The second part extends in a third direction from a fifth end to a sixth end and from a seventh end close to the backrest to an eighth end distant from the backrest, so that at least an upper section of the second part extends laterally from the person's head. The third part extends in the second direction from a ninth end outside the person to a tenth end inside the person, so that at least one upper section of the third part faces the person's face.

An omnidirectional airbag, which is deployed in a form that covers a side part and a front part of the passenger, has an airbag cushion having a frontal chamber and a side chamber connected to each other.

The airbag cushion is folded on the left and right surfaces of a seat. The airbag cushion is deployed toward the front space of a passenger in the event of a vehicle collision and then encloses the passenger's side and front to protect the passenger.

However, when the side chamber and the front chamber are rotated outward in the deployment process of the airbag cushion and opened excessively, there is a gap in front of the passenger, making it difficult to restrain the passenger safely.

Accordingly, as a tether connects the front chamber and/or the side chamber and the seat to each other, the front chamber is restricted from being rotated outward by the tether, controlling the deployment form of the airbag cushion.

However, in the process of unfolding the tether with the airbag cushion, there is a possibility that the tether may be brought into contact with a passenger's body part, causing injury to the passenger.

The description provided above as a related art of the present disclosure is just to help understand the background of the present disclosure and should not be construed as being included in the related art known by those skilled in the art.

### SUMMARY

The present disclosure is proposed to solve the above problem, an objective of the present disclosure is to provide an airbag device configured to prevent a tether that is unfolded between an omnidirectional airbag and a seat from being brought into contact with a passenger's body part.

The technical problems to be achieved in the present disclosure are not limited to the above technical problem, and other problems not mentioned will be clearly understood by those skilled in the art from the description below.

In a general aspect of the disclosure, an airbag device includes: an airbag cushion deployed to cover a side surface and a front surface of a seat; a restraint tether connected to the airbag cushion at a position passing a body part of a passenger between an inner surface of the airbag cushion and a seatback; and a tether wire connected from a front portion of the airbag cushion through an outside space of the airbag cushion to the restraint tether so that the restraint tether is pulled in a direction opposite to the passenger by a deployment force of the airbag cushion.

The tether wire may be connected to a portion of the restraint tether closest to the body part of the passenger.

The restraint tether may be connected to a position that passes a shoulder part of the passenger, and the tether wire is connected to a portion of the restraint tether closest to a neck portion of the passenger.

The tether wire, connected to an inner surface of a front end of the airbag cushion at a first end thereof, extends rearward inside the airbag cushion to exit the airbag cushion, wherein the tether wire is connected to the restraint tether at a second end thereof.

The airbag cushion may include: a side chamber deployed to cover the side surface of the seat; and a front chamber deployed to cover the front surface of the seat, wherein the first end of the tether wire may be fixed to an inner surface of the front chamber.

The airbag cushion may include a partition wall having a through hole extending through the inner surface of the airbag cushion, wherein the tether wire may pass through the through hole and then extend rearward.

An insertion hole may be formed at a rear end of the airbag cushion, wherein the tether wire may come out the airbag cushion through the insertion hole.

The second end of the tether wire may be connected to the restraint tether from a direction of the side chamber.

The tether wire coming out of the airbag cushion may extend upward along the side chamber and, at a height where the restraint tether is located, may extend toward and is connected to the restraint tether.

According to the present disclosure, the tether wire pulls the restraint tether in a direction opposite to the passenger from the time when the restraint tether is brought into contact with the passenger's head, neck, etc., so there is an effect in preventing injury to the passenger, with the restraint tether configured to avoid contact with the passenger's head and neck.

Moreover, in the deployment process of the airbag cushion, the movement of pulling the tether wire secures additional restraint force of the upper restraint tether so that the restraint force of the airbag cushion is increased. Furthermore, to secure the restraint force of the upper restraint tether, the tether wire is only added without an additional device, such as an actuator, etc., so that the cost competitiveness of the airbag device can be increased.

In addition, the tether wire is pulled in conjunction with the deployment operation of the airbag cushion, and therefore, there is no risk of malfunctions in the tether wire under a condition where the airbag is normally operated, the operability of the tether wire can be secured.

The effect of the present disclosure is not limited to the above-mentioned effects, and other effects not mentioned will be clearly understood by those skilled in the art from the description below.

### BRIEF DESCRIPTION OF THE DRAWINGS

FIG. 1 is a view showing an airbag cushion according to the present disclosure, which is deployed.
FIG. 2 is a view showing a structure in which a tether wire according to the present disclosure is connected to a restraint tether.
FIG. 3 is a view showing a lower restraint tether according to the present disclosure.
FIG. 4 is a view showing a structure in which the tether wire according to the present disclosure extends from the inside space of the airbag cushion to the outside space.

### DETAILED DESCRIPTION

In the following description, if it is decided that the detailed description of known technologies related to the present disclosure makes the subject matter of the embodiment described herein unclear, the detailed description is omitted. Furthermore, the accompanying drawings are provided only for easy understanding of the embodiment disclosed in the specification, and the technical spirit disclosed in the specification is not limited by the accompanying drawings, and all changes, equivalents, and replacements should be understood as being included in the spirit and scope of the present disclosure.

Terms including ordinal numbers such as "first", "second", etc. may be used to describe various components, but the components are not to be construed as being limited to the terms. The terms are used only to distinguish one component from another component.

Singular forms are intended to include plural forms unless the context clearly indicates otherwise.

It will be further understood that the terms "comprise" or "have" used in this specification, specify the presence of stated features, steps, operations, components, parts, or a combination thereof, but do not preclude the presence or addition of one or more other features, numerals, steps, operations, components, parts, or a combination thereof.

The suffixes "module" and "part" for the components used in the following description are given or mixed in consideration of only the ease of writing the specification, and do not have distinct meanings or roles by themselves.

It is to be understood that when one element is referred to as being "connected to" or "coupled to" another element, it may be connected directly to or coupled directly to another element or be connected to or coupled to another element, having the other element intervening therebetween. On the other hand, it should to be understood that when one element is referred to as being "connected directly to" or "coupled directly to" another element, it may be connected to or coupled to another element without the other element intervening therebetween.

Hereinbelow, the embodiment disclosed herein will be described with reference to accompanying drawings.

An airbag device of the present disclosure includes: an airbag cushion 100 deployed in a form that covers a side surface and a front surface of a seat; a restraint tether 200 connected to a position that passes a body part of a passenger between an inner surface of the airbag cushion 100 and a seatback; and a tether wire 300 connected from a front portion of the airbag cushion 100 through the outside space of the airbag cushion 100 to the restraint tether 200 to pull the restraint tether 200 in a direction opposite to the passenger by a deployment force of the airbag cushion 100 to prevent the restraint tether 200 from being brought into contact with the passenger.

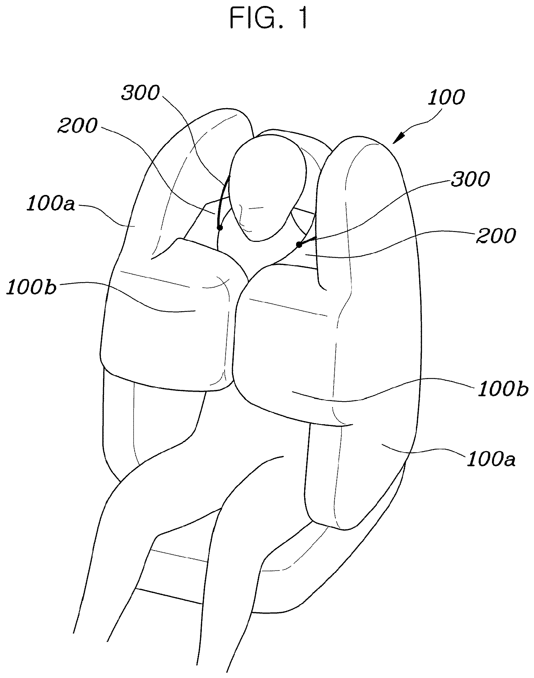

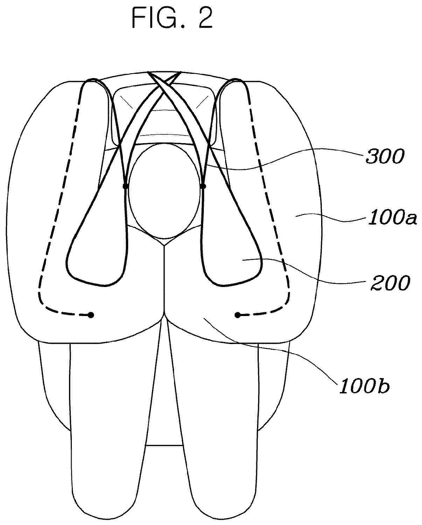

Describing with reference to FIGS. 1 and 2, the airbag cushion 100 includes a side chamber 100a deployed in a form that covers the side surface of the seat, and a front chamber 100b deployed in a form that covers the front surface of the seat.

The side chamber 100a is deployed forward from each of left and right parts of the seatback and deployed long in a vertical longitudinal direction.

The side chamber 100a is deployed toward a space between a vehicle structure, such as a door, a center console, etc., and a passenger to protect the passenger's main lateral body parts, such as head, shoulder, chest, abdomen, and pelvis.

The front chamber 100b is connected to a front end of each of the left and right side chambers 100a and deployed in a form that is bent toward the front space of the passenger.

The front chamber 100b is deployed to protect an area from the shoulder of the passenger to the abdomen.

In other words, in the left and right spaces of the seat, the side chamber 100a and the front chamber 100b are deployed to enclose entirely the both lateral and front surfaces of the passenger.

Therefore, the airbag of the present disclosure directly restrains the passenger with respect to various seat positions and passenger postures, and the airbag can respond to different crash modes to secure the passenger's safety and can replace a seat belt as well as airbags in other positions, significantly improving the productivity of the airbag.

The restraint tether 200 may be an upper restraint tether 200 connected to both an upper portion of the airbag cushion 100 and an upper end of the seatback while being located therebetween.

A front surface and a side surface of the upper restraint tether 200 are respectively fixed, with an upper end of the front chamber 100b, to an inner surface of the side chamber 100a to which the upper end of the front chamber 100b is connected.

Furthermore, the upper restraint tether 200 may pass over a shoulder of the passenger and then be connected to a seatback frame embedded in an upper end of the seatback.

At this point, one upper restraint tether 200 connected to the left upper end of the seatback is connected to an upper portion of the right airbag cushion 100, and another upper restraint tether 200 connected to the right upper end of the seatback is connected to the upper portion of the left airbag cushion 100. Therefore, the left and right upper restraint tethers 200 are arranged to cross around the neck portion of the passenger so that the restraint force of the airbag cushion 100 can be increased. However, this arrangement may cause the upper restraint tether 200 to be brought into contact with the neck of the passenger during the deployment process of the airbag cushion 100, but the tether wire 300 prevents the upper restraint tether 200 from being brought into contact with the neck of the passenger.

Furthermore, the restraint tether may include a lower restraint tether 210 connected to both a lower portion of the airbag cushion 100 and a lower end of the seatback while being located therebetween.

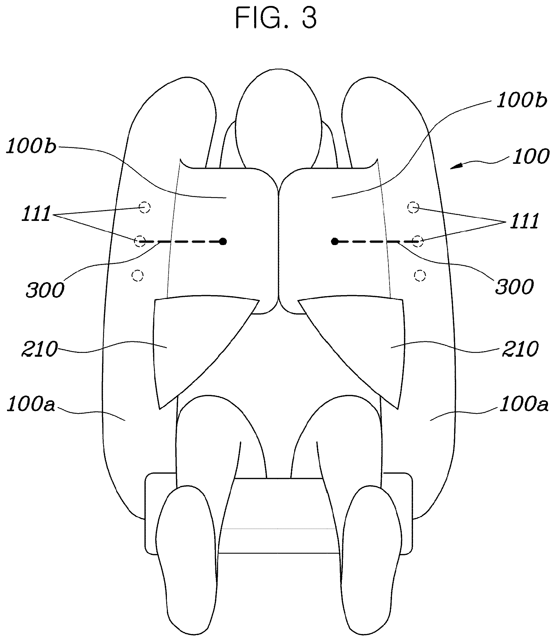

Describing with reference to FIG. 3, a front surface and a side surface of the lower restraint tether 210 are respectively connected, with a lower end of the front chamber 100b, to the inner surface of the side chamber 100a that extends to the lower end of the front chamber 100b.

Furthermore, the lower restraint tether 210 may pass over an upper leg part of the passenger and be connected to a seatback frame embedded in the lower end of the seatback.

According to the present disclosure, it is preferable that the tether wire 300 is connected to the upper restraint tether 200, but may be connected to the lower restraint tether 210 in some cases.

However, hereinbelow, the configuration of the tether wire 300 connected to the upper restraint tether 200 will only be described.

Specifically, as shown in FIGS. 1 and 2, the tether wire 300 of the present disclosure has a form of a cord, such as a string or a strap, and is connected to the outside part of the airbag cushion 100 while being fixed to the front part of the airbag cushion 100 or a portion near the front part.

In addition, the tether wire 300 connected to the outside part of the airbag cushion 100 is connected to a contact point of the upper restraint tether 200 that may be brought into contact with the neck of the passenger.

Thereafter, when the airbag cushion 100 is deployed, due to a deployment pressure of the airbag cushion 100, one end of the tether wire 300 connected to the front part of the airbag cushion 100 is pulled forward, and the upper restraint tether 200 connected to the other end of the tether wire 300 is pulled in a direction away from the passenger.

As described above, the tether wire 300 pulls the upper restraint tether 200 from the time the upper restraint tether 200 is brought into contact with the passenger's head and neck, which allows the upper restraint tether 200 to avoid contact with the passenger's head and neck to prevent an injury risk of the passenger.

Moreover, in the deployment process of the airbag cushion 100, the movement of pulling the tether wire 300 secures additional restraint force of the upper restraint tether 200 so that the restraint force of the airbag cushion 100 is increased. Furthermore, to secure the restraint force of the upper restraint tether 200, the tether wire 300 is only added without an additional device such as an actuator, etc. so that the cost competitiveness of the airbag device can be increased.

In addition, since the tether wire 300 is pulled in conjunction with the deployment operation of the airbag cushion 100, there is no risk of malfunctions of the tether wire 300 in a condition where the airbag is normally operated, and the operability of the tether wire 300 can be secured.

Furthermore, as shown in FIG. 2, the tether wire 300 may be connected to the restraint tether 200 closest to the passenger's body part.

Preferably, the restraint tether 200 may be connected to a position that passes over the passenger's shoulder, and the tether wire 300 may be connected to the restraint tether 200 closest to the neck of the passenger.

In other words, as described above, the tether wire 300 is connected to the upper restraint tether 200 and, specifically within a longitudinal range of the upper restraint tether 200, connected to a portion located closest to the neck of the passenger.

Therefore, since the tether wire 300 pulls the portion of the restraint tether 200 that may be brought in contact with the passenger's head, neck, etc., the airbag cushion 100 is deployed while avoiding contact between the restraint tether 200 and the passenger's head and neck, and the risk of injury to passengers' body parts due to friction with the restraint tether 200 is prevented.

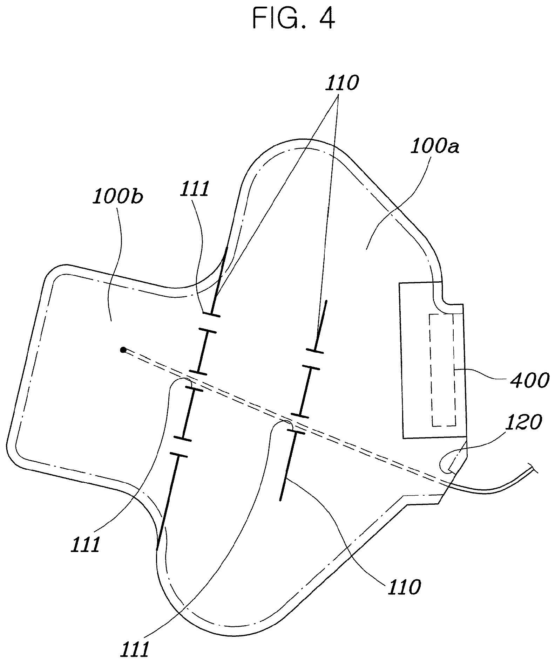

Meanwhile, as shown in FIGS. 2 and 4, a first end of the tether wire 300 is connected to the inner surface of the front end of the airbag cushion 100, extends rearward inside the airbag cushion 100, and exists out the airbag cushion 100 to be connected to the restraint tether 200 at a second end.

The airbag cushion 100 includes the side chamber 100a deployed in a form that covers the side surface of the seat, and the front chamber 100b deployed in a form that covers the front surface of the seat. The first end of the tether wire 300 is fixed to the inner surface of the front chamber 100b.

In other words, the front end of the tether wire 300 is fixed in the front chamber 100b, and the tether wire 300 is prevented from disturbing the deployment operation of the front chamber 100b in the deployment process of the airbag cushion 100.

Therefore, the tether wire 300 is pulled without the risk of deployment malfunctions of the airbag cushion 100, and the operability of the tether wire 300 can be secured.

Furthermore, in the present disclosure, as shown in FIG. 4, a partition wall 110 with a through hole 111 is fixed to the inner surface of the airbag cushion 100; and the tether wire 300 passes through the through hole 111 so that the tether wire 300 may extend rearward.

For example, a plurality of partition walls 110 having a surface form is fixed on the inner surface of the airbag cushion 100 to inflate the side chamber 100a and the front chamber 100b into desired deployment forms.

A plurality of through holes 111 is formed in the partition wall 110, and gas in the airbag cushion 100 may flow through the through holes 111.

Specifically, in addition to the flow of the gas in the airbag cushion 100, the tether wire 300 passes through the through hole 111, and the through hole 111 may guide a moving path of the tether wire 300.

Thereafter, a sectional area of the through hole 111 is formed to be greater than or at least equal to a sectional area of the tether wire 300 so that the moving operation of the tether wire 300 through the through hole 111 is easily performed.

In addition, in the present disclosure, an insertion hole 120 is formed in the rear end of the airbag cushion 100, and the tether wire 300 comes out the airbag cushion 100 through the insertion hole 120.

In other words, since a middle portion of the tether wire 300 passes through the inner space of the side chamber 100a, the middle portion of the tether wire 300 is prevented from disturbing the deployment operation of the side chamber 100a in the deployment process of the airbag cushion 100, and the tether wire 300 is unfolded while avoiding the passenger.

Therefore, the tether wire 300 is pulled without the risk of deployment malfunctions of the airbag cushion 100 so that the operability of the tether wire 300 can be secured.

Moreover, the insertion hole 120 may be a hole through which an inflator 400 is inserted into the airbag cushion 100.

In other words, the inflator 400 is a device triggered by a crash signal of a vehicle to explode and produce gas, and the insertion hole 120 is formed close to a portion of the airbag cushion 100 connected to the inflator 400 so that the inflator 400 is inserted through the insertion hole 120.

Therefore, the insertion hole 120 of the inflator 400 is also used as a hole through which the tether wire 300 passes, and a separate hole for the tether wire 300 to be inserted into the airbag cushion 100 is not required. Therefore, work for forming the hole is not required, and the manufacturing hours of the airbag cushion 100 can be reduced.

Furthermore, in the present disclosure, as shown in FIGS. 1 and 2, the second end of the tether wire 300 may be connected to the restraint tether 200 from the direction of the side chamber 100a.

In other words, the restraint tether 200 pulls the airbag cushion 100 toward a first rear space of the passenger, and the tether wire 300 connected to the restraint tether 200 pulls the airbag cushion 100 toward a second rear space of the passenger.

Specifically, the tether wire 300 coming out the airbag cushion 100 extends upward along the side chamber 100a and, at a height of the restraint tether 200, extends toward the restraint tether 200 to be connected to the restraint tether 200.

In other words, the restraint tether 200 is not only pulled by the seatback located behind the restraint tether 200 at an equal height to the restraint tether 200, but also pulled by the tether wire 300 in an outward direction of the restraint tether 200.

Therefore, when the tether wire 300 is not applied, a single load path of pulling the airbag cushion 100 is only formed in a rear-sideward direction of the seatback. However, when the tether wire 300 is applied as described in the present disclosure, a load path of pulling the airbag cushion 100 is branched toward the side chamber 100a, increasing the restraint force of the airbag cushion 100.

Although the specific embodiment of the present disclosure has been provided, it is apparent to one of ordinary skill in the art that the present disclosure may be changed and modified in various ways without departing from the scope of the present disclosure, which is provided in the following claims.

## Claims

1. An airbag device comprising:
an airbag cushion (100) deployed to cover a side surface and a front surface of a seat;
a restraint tether (200) connected to the airbag cushion (100) at a position passing a body part of a passenger between an inner surface of the airbag cushion (100) and a seatback; and
a tether wire (300) connected from a front portion of the airbag cushion (100) through an outside space of the airbag cushion (100) to the restraint tether (200) so that the restraint tether (200) is pulled in a direction opposite to the passenger by a deployment force of the airbag cushion (100),
wherein the tether wire (300), connected to an inner surface of a front end of the airbag cushion (100) at a first end thereof, extends rearward inside the airbag cushion (100) to exit the airbag cushion (100), and
wherein the tether wire (300) is connected to the restraint tether (200) at a second end thereof.

2. The airbag device of claim 1, wherein the tether wire (300) is connected to a portion of the restraint tether (200) closest to the body part of the passenger.

3. The airbag device of claim 2, wherein the restraint tether (200) is connected to a position that passes a shoulder part of the passenger, and the tether wire (300) is connected to a portion of the restraint tether (200) closest to a neck portion of the passenger.

4. The airbag device of any one of claims 1 to 3, wherein the airbag cushion (100) comprises:
a side chamber (100a) deployed to cover the side surface of the seat; and
a front chamber (100b) deployed to cover the front surface of the seat, and
wherein the first end of the tether wire (300) is fixed to an inner surface of the front chamber (100b).

5. The airbag device of any one of claims 1 to 4, wherein the airbag cushion (100) includes a partition wall (110) having a through hole (111) extending through the inner surface of the airbag cushion (100), and
wherein the tether wire (300) passes through the through hole (111) and then extends rearward.

6. The airbag device of any one of claims 1 to 5, wherein an insertion hole (120) is formed at a rear end of the airbag cushion (100), and
wherein the tether wire (300) comes out the airbag cushion (100) through the insertion hole (120).

7. The airbag device of claim 6, wherein the insertion hole (120) is provided to insert an inflator (400) into the airbag cushion (100).

8. The airbag device of any one of claims 4 to 7, wherein the second end of the tether wire (300) is connected to the restraint tether (200) from a direction of the side chamber (100a).

9. The airbag device of any one of claims 1 to 8, wherein the tether wire (300) coming out of the airbag cushion (100) extends upward along the side chamber (100a) and, at a height where the restraint tether (200) is located, extends toward and is connected to the restraint tether (200).

10. The airbag device of any of claims 1 to 9, wherein the restraint tether (200) includes a lower restraint tether (210) connected to both a lower portion of the airbag cushion (100) and a lower end of the seatback while being located therebetween.

11. The airbag device of claim 10, wherein the restraint tether (200) is an upper restraint tether (200) connected to both an upper portion of the airbag cushion (100) and an upper end of the seatback while being located therebetween.

## Patentansprüche

1. Airbagvorrichtung, aufweisend:
ein Airbagkissen (100), das entfaltet wird, um eine Seitenfläche und eine Vorderseite eines Sitzes abzudecken;
einen Haltegurt (200), der an einer Position, die an einem Körperteil eines Insassen vorbeiführt, zwischen einer Innenfläche des Airbagkissens (100) und einer Rückenlehne mit dem Airbagkissen (100) verbunden ist; und
ein Spannkabel (300), das von einem vorderen Abschnitt des Airbagkissens (100) durch einen Außenraum des Airbagkissens (100) hindurch mit dem Haltegurt (200) verbunden ist, sodass der Haltegurt (200) durch eine Entfaltungskraft des Airbagkissens (100) in eine dem Insassen entgegengesetzte Richtung gezogen wird,
wobei sich das Spannkabel (300), das an einem ersten Ende mit einer Innenfläche eines vorderen Endes des Airbagkissens (100) verbunden ist, innerhalb des Airbagkissens (100) nach hinten erstreckt, um aus dem Airbagkissen (100) herauszutreten, und
wobei das Spannkabel (300) an einem zweiten Ende mit dem Haltegurt (200) verbunden ist.

2. Airbagvorrichtung nach Anspruch 1, wobei das Spannkabel (300) mit einem dem Körperteil des Insassen am nächsten liegenden Abschnitt des Haltegurts (200) verbunden ist.

3. Airbagvorrichtung nach Anspruch 2, wobei der Haltegurt (200) mit einer Stelle verbunden ist, die an einem Schulterbereich des Insassen vorbeiführt, und das Spannkabel (300) mit einem Abschnitt des Haltegurts (200) verbunden ist, der einem Nackenbereich des Insassen am nächsten liegt.

4. Airbagvorrichtung nach einem der Ansprüche 1 bis 3, wobei das Airbagkissen (100) aufweist:
eine Seitenkammer (100a), die zum Abdecken der Seitenfläche des Sitzes angeordnet ist; und
eine Vorderkammer (100b), die zum Abdecken der Vorderseite des Sitzes angeordnet ist, und
wobei das erste Ende des Spannkabels (300) mit einer Innenfläche der Vorderkammer (100b) verbunden ist.

5. Airbagvorrichtung nach einem der Ansprüche 1 bis 4, wobei das Airbagkissen (100) eine Trennwand (110) mit einer Durchgangsöffnung (111) aufweist, die sich durch die Innenfläche des Airbagkissens (100) erstreckt, und
wobei das Spannkabel (300) durch die Durchgangsöffnung (111) verläuft und sich dann nach hinten erstreckt.

6. Airbagvorrichtung nach einem der Ansprüche 1 bis 5, wobei eine Einführöffnung (120) an einem hinteren Ende des Airbagkissens (100) ausgebildet ist; und
wobei das Spannkabel (300) durch die Einführöffnung (120) aus dem Airbagkissen (100) heraustritt.

7. Airbagvorrichtung nach Anspruch 6, wobei die Einsetzbohrung (120) zum Einsetzen eines Gasgenerators (400) in das Airbagkissen (100) vorgesehen ist.

8. Airbagvorrichtung nach einem der Ansprüche 4 bis 7, wobei das zweite Ende des Spannkabels (300) von einer Richtung der Seitenkammer (100a) her mit dem Haltegurt (200) verbunden ist.

9. Airbagvorrichtung nach einem der Ansprüche 1 bis 8, wobei sich das aus dem Airbagkissen (100) heraustretende Spannkabel (300) entlang der Seitenkammer (100a) nach oben erstreckt und sich in einer Höhe, in der sich der Haltegurt (200) befindet, zum Haltegurt (200) erstreckt und mit diesem verbunden ist.

10. Airbagvorrichtung nach einem der Ansprüche 1 bis 9, wobei der Haltegurt (200) einen unteren Haltegurt (210) aufweist, der sowohl mit einem unteren Abschnitt des Airbagkissens (100) als auch mit einem unteren Ende der Rückenlehne verbunden ist und sich dabei zwischen diesen befindet.

11. Airbagvorrichtung nach Anspruch 10, wobei der Haltegurt (200) ein oberer Haltegurt (200) ist, der sowohl mit einem oberen Abschnitt des Airbagkissens (100) als auch mit einem oberen Ende der Rückenlehne verbunden ist und sich dabei zwischen diesen befindet.

## Revendications

1. Dispositif de coussin gonflable comprenant:
un coussin de coussin gonflable (100) déployé pour recouvrir une surface latérale et une surface avant d'un siège;
une attache de retenue (200) reliée au coussin de coussin gonflable (100) à une position passant devant une partie corps d'un passager entre une surface intérieure du coussin de coussin gonflable (100) et un dossier de siège; et
un fil d'attache (300) relié d'une partie avant du coussin de coussin gonflable (100) à l'attache de retenue (200) par l'intermédiaire d'un espace extérieur du coussin de coussin gonflable (100) de sorte que l'attache de retenue (200) est tirée dans une direction opposée au passager par une force de déploiement du coussin de coussin gonflable (100),
dans lequel le fil d'attache (300), relié à une surface intérieure d'une extrémité avant du coussin de coussin gonflable (100) à une première extrémité de celui-ci, s'étend vers l'arrière à l'intérieur du coussin de coussin gonflable (100) pour sortir du coussin de coussin gonflable (100), et
dans lequel le fil d'attache (300) est relié à l'attache de retenue (200) à une seconde extrémité de celui-ci.

2. Dispositif de coussin gonflable selon la revendication 1, dans lequel le fil d'attache (300) est relié à une partie de l'attache de retenue (200) la plus proche de la partie corps du passager.

3. Dispositif de coussin gonflable selon la revendication 2, dans lequel l'attache de retenue (200) est reliée à une position qui passe devant une partie épaule du passager, et le fil d'attache (300) est relié à une partie de l'attache de retenue (200) la plus proche d'une partie cou du passager.

4. Dispositif de coussin gonflable selon l'une quelconque des revendications 1 à 3, dans lequel le coussin de coussin gonflable (100) comprend:
une chambre latérale (100a) déployée pour recouvrir la surface latérale du siège; et
une chambre avant (100b) déployée pour recouvrir la surface avant du siège, et
dans lequel la première extrémité du fil d'attache (300) est fixée à une surface intérieure de la chambre avant (100b).

5. Dispositif de coussin gonflable selon l'une quelconque des revendications 1 à 4, dans lequel le coussin de coussin gonflable (100) inclut une paroi de séparation (110) ayant un trou traversant (111) s'étendant à travers la surface intérieure du coussin de coussin gonflable (100), et
dans lequel le fil d'attache (300) passe par le trou traversant (111) et puis s'étend vers l'arrière.

6. Dispositif de coussin gonflable selon l'une quelconque des revendications 1 à 5, dans lequel un trou d'insertion (120) est formé à une extrémité arrière du coussin de coussin gonflable (100), et
dans lequel le fil d'attache (300) sort du coussin de coussin gonflable (100) par le trou d'insertion (120).

7. Dispositif de coussin gonflable selon la revendication 6, dans lequel le trou d'insertion (120) est prévu pour insérer un gonfleur (400) dans le coussin de coussin gonflable (100).

8. Dispositif de coussin gonflable selon l'une quelconque des revendications 4 à 7, dans lequel la seconde extrémité du fil d'attache (300) est reliée à l'attache de retenue (200) depuis une direction de la chambre latérale (100a).

9. Dispositif de coussin gonflable selon l'une quelconque des revendications 1 à 8, dans lequel le fil d'attache (300) sortant du coussin de coussin gonflable (100) s'étend vers le haut le long de la chambre latérale (100a) et, à une hauteur où est située l'attache de retenue (200), s'étend vers et est relié à l'attache de retenue (200).

10. Dispositif de coussin gonflable selon l'une quelconque des revendications 1 à 9, dans lequel l'attache de retenue (200) inclut une attache de retenue inférieure (210) reliée à la fois à une partie inférieure du coussin de coussin gonflable (100) et à une extrémité inférieure du dossier de siège tout en étant située entre celles-ci.

11. Dispositif de coussin gonflable selon la revendication 10, dans lequel l'attache de retenue (200) est une attache de retenue supérieure (200) reliée à la fois à une partie supérieure du coussin de coussin gonflable (100) et à une extrémité supérieure du dossier de siège tout en étant située entre celles-ci.
